# EUROPÄISCHE PATENTSCHRIFT

(11) **EP 0 874 142 B1**
(45) Veröffentlichungstag und Bekanntmachung des Hinweises auf die Patenterteilung: **20.11.2002**
(21) Anmeldenummer: 98105716.9
(22) Anmeldetag: 30.03.1998
(51) Int. Cl.: F02B 29/04, F01N 3/04

(54) **Vorrichtung zur integrierten Führung von flüssigen und gasförmigen Medien einer Brennkraftmaschine**
Device for integrated guiding of liquid and gaseous media
Dispositif de guidage intégré de substances liquides et gazeuses

(30) Priorität: 24.04.1997 DE 19717328
(43) Veröffentlichungstag der Anmeldung: 28.10.1998
(73) Patentinhaber: Volkswagen Aktiengesellschaft, 38436 Wolfsburg (DE)
(72) Erfinder: Rutke, Peter, 38154 Rhode (DE); Schneemann, Jens, 38300 Wolfenbüttel (DE)

(56) Entgegenhaltungen:
- DE-A- 2 715 513
- NL-A- 7 902 727
- US-A- 4 823 868
- PATENT ABSTRACTS OF JAPAN vol. 010, no. 222 (M-504), 2. August 1986 & JP 61 058918 A (MAZDA MOTOR CORP), 26. März 1986

## Beschreibung

Die Erfindung betrifft eine Vorrichtung zur integrierten Führung von flüssigen und gasförmigen Medien einer Brennkraftmaschine gemäß dem Oberbegriff des Patentanspruches 1.

Eine solche Vorrichtung ist aus der DE 27 15 513 A1 bekannt. Ein an einem Zylinderkopf einer Brennkraftmaschine gehaltenes und insgesamt einteilig ausgebildetes Gehäuse weist benachbart zu einer der Brennkraftmaschine zugewandten Gehäusewandung einen in Längsrichtung verlaufenden und Verbrennungsluft führenden Kanal auf. Innerhalb dieses Gehäuses ist benachbart zu der der genannten Gehäusewandung gegenüberliegenden Außenwand ein Rohrbündelwärmetauscher angeordnet.
Diese Vorrichtung und die damit ausgestattete Brennkraftmaschine ist speziell für maritime Zwecke ausgelegt. Zu diesem Zwecke ist das dortige Gehäuse an einer Stirnseite mit einem Anschlußflansch für einen Turbolader ausgerüstet, welcher verdichtete Verbrennungsluft in den Kanal drückt. Dieser Kanal weist Öffnungen auf, durch welche die Ladeluft unmittelbar in korrespondierende Öffnungen von Einlaßkanälen im Zylinderkopf dieser Brennkraftmaschine geführt wird.
In einem unten liegenden Bereich des Gehäuses ist eine mit Auslaßkanälen des Zylinderkopfes verbunden Abgassammelleitung geführt, welche flüssigkeitsgekühlt ist. Das Motorkühlmittel, in diesem Falle Süßwasser, wird von dem Zylinderkopf der Brennkraftmaschine in die Vorrichtung geleitet und dient dort der Kühlung des Abgaskanales sowie des Turboladers. In Abhängigkeit von der Kühlmitteltemperatur wird über einen Bypass gesteuert das Motorkühlmittel entweder unter Umgehung oder unter Beaufschlagung des genannten Wärmetauschers geführt. Dieser wird im Gegenstrom von Seewasser durchströmt.
Auf der der Vorrichtung gegenüberliegenden Seite dieser Brennkraftmaschine ist ein Seewassereinlaß angeordnet, welcher zunächst einen Seewasser/ Motorölkühler, anschließend einen Seewasser/Getriebeölkühler und dann einen Seewasser/Ladeluftkühler versorgt. In Folge dessen wird die verdichtete Ladeluft zunächst von dem auf der anderen Seite der Brennkraftmaschine angeordneten Turbolader über eine Ladeluftleitung zu diesem Kühler und anschließend von diesem wieder zurück in den bereits genannten, Verbrennungsluft führenden Kanal geleitet.
Dieser Stand der Technik zeichnet sich im wesentlichen dadurch aus, daß in einem einteiligen Gehäuse in integrierter Form die Kühlflüssigkeit der Brennkraftmaschine getrennt von dem Seewasser geführt wird, die verdichtete Ladeluft geführt wird und die Abgasleitung von dem Motorkühlmittel gekühlt wird. Die mit dieser Vorrichtung ausgestattete Brennkraftmaschine weist jedoch eine vergleichsweise hohe Anzahl von Rohren bzw. Leitungen zur Führung der flüssigen und gasförmigen Medien, verbunden mit einem entsprechenden Verbindungs- und Abdichtungsaufwand, auf.

Aus der DE-Z MTZ Motortechnische Zeitschrift 57, 1996, Nr. 10, Seiten 540 bis 546 ist eine speziell für den Antrieb von Schiffen ausgelegte Brennkraftmaschine bekannt, welche mit einer V-förmigen Zylinderanordnung versehen ist. An einer endseitigen Stirnseite dieser Brennkraftmaschine ist ein sogenannter Service-Block angeordnet, welcher einen Kühlwasserausgleichs- und Vorratsbehälter, mehrere Thermostate und Kurzschlußübertritte sowie Ölfilter aufweist. Unterhalb dieses Serviceblockes ist ein Plattenwärmetauscher als Seewasser/Motorkühlmittel-Wärmetauscher angeordnet.
Dieser Service-Block sowie der Wärmetauscher erhöhen die Baulänge dieser Brennkraftmaschine erheblich.

Der Erfindung liegt die Aufgabe zugrunde, eine gattungsgemäße Vorrichtung zur integrierten Führung von flüssigen und gasförmigen Medien einer Brennkraftmaschine zu schaffen, welche unter weitestgehender Vermeidung von externen Leitungen und Verrohrungen eine Vielzahl von Funktionen zum Führen bzw. Kühlen dieser Medien in kompakter Form integriert.

Die Lösung dieser Aufgabe gelingt mit den Merkmalen des Patentanspruches 1.
Die Erfindung sieht vor, daß das Gehäuse geteilt ausgebildet ist, wobei die Teilungsebene im wesentlichen senkrecht zu der der Brennkraftmschine zugewandten Gehäusewandung verläuft. Sowohl der durch die Teilung gebildete Gehäusegrundkörper als auch der sich daran anschließende Gehäusedeckel sind gegenüber dieser Teilungsebene offen ausgebildet. Im Gehäusegrundkörper sind der Verbrennungsluft führende Schacht und sich daran anschließende, mit dem Zylinderkopf zusammenwirkende Saugrohre sowie der Wärmetauscher angeordnet, während mit Hilfe des aufgesetzten Gehäusedeckels ein den erwähnten Kanal überdeckender und abdichtender luftzuführender Schacht gebildet ist.
Dieser modulare Aufbau bietet eine Reihe von Vorteilen und ist die Grundlage für eine Reihe von vorteilhaften Ausgestaltungen.
So kann diese Vorrichtung beispielsweise bei einer Brennkraftmaschine mit oder ohne Aufladung der Verbrennungsluft eingesetzt werden, ohne daß hierfür an dem Gehäuse grundsätzlich etwas zu ändern wäre. Im Falle einer nicht aufgeladenen Brennkraftmaschine gelangt die Verbrennungsluft über den luftzuführenden Schacht, durchquert von dort aus den Kanal und gelangt in die sich daran anschließenden Saugrohre, welche schließendlich die Luft den einzelnen Zylindern zuführt. Dieser vorbeschriebene Strömungsweg ist zunächst unabhängig davon, ob die Vorrichtung an ihrem Anschlußflansch eine Aufladeeinrichtung trägt.
Ist eine Aufladeeinrichtung vorgesehen, so kann in einfacher Weise in dem Verbrennungsluft führenden Kanal und dem durch diesen beanspruchten Volumen ein weiterer Wärmetauscher angeordnet werden. Dieser dient der Herabsetzung der Ladelufttemperatur und steigert somit den Wirkungsgrad der mit dieser Vorrichtung ausgestatteten Brennkraftmaschine. Besonders bevorzugt ist dabei vorgesehen, daß sich es sich um einen flüssigkeitsgekühlten Ladeluftkühler handelt. Die Verlegung der Luftzufuhr in den in dem Gehäusedeckel ausgebildeten Schacht ermöglicht es, eine optimale Luftströmung und Gleichverteilung über die Länge des Wärmetauschers vorzunehmen. Dieser wird dann etwa von der Teilungsebene ausgehend und unter Annahme einer senkrecht verbauten Brennkraftmaschine senkrecht von der Ladeluft durchströmt, welche anschließend in die im Gehäusegrundkörper ausgebildeten Saugrohre eintritt. Die Ausbildung von separaten Saugrohren innerhalb des Gehäusegrundkörpers ermöglicht durch die gezielte Führung von Kühlmedien eine weitere Beeinflussung der durch die Saugrohre strömenden Ansaugluft, sowie eine gezielte und zylinderindividuelle Abgasrückführung.
Der aus dem Stand der Technik bekannte und von der der Brennkraftmaschine zugewandten Gehäusewandung abweisend gelegene Wärmetauscher und der mit ihm verbundene Flüssigkeitskreislauf erfährt durch die Anordnung des Gehäusedeckels eine erweiterte Funktionalität, da in diesem Gehäusedeckel neben dem luftzuführenden Schacht ein Flüssigkeitsbehälter ausgebildet werden kann. Dieser wirkt gleichzeitig als Dehngefäß und erübrigt eine ansonsten separate Anordnung eines solchen Behälters mit der dazu gehörigen Verrohrung.

Die erfindungsgemäße Vorrichtung ist besonders vorteilhaft an Brennkraftmaschinen für maritime Zwecke einsetzbar. Daher ist es besonders bevorzugt, daß bei Einsatz eines Ladeluftkühlers dieser als RohwasserlLuft-Wärmetauscher ausgebildet ist, d. h. von Seewasser durchströmt wird. Der in jedem Fall vorhandene und aus dem Stand der Technik bekannte Wärmetauscher für das Motorkühlmittel wird ebenfalls von Seewasser durchströmt und ist somit als Flüssigkeits/Flüssigkeits-Wärmetauscher ausgebildet.
Eine besonders einfache und effektive Trennung der verschiedenen Medienströme innerhalb des Gehäuses wird bevorzugt dadurch erzielt, daß in dem Gehäuse eine im wesentlichen senkrecht zur Trennebene verlaufende Trennwand vorgesehen ist, welche abschnittsweise im Grundgehäuse und im Gehäusedeckel ausgebildet ist. Dabei ist vorgesehen, daß zwischen der der Brennkraftmaschine zugewandten Gehäusewandung und dieser Trennwand der luftzuführende Bereich angeordnet ist, während auf der von der Brennkraftmaschine abgewandten Seite der Trennwand der Seewasser/Motorkühlmittel-Wärmetauscher angeordnet ist.

In weiterer vorteilhafter Ausgestaltung kann das Gehäuse endseitig ein quer angeflanschtes Verteilergehäuse aufweisen, in welchen das Seewasser eingespeist wird und anschließend über eine vorteilhafte Anordnung von Leitwänden innerhalb des Verteilergehäuses zu beiden Wärmetauschern gelangt bzw. von diesen rückgeführt wird und abschließend über einen Rohwasserablaß abgeleitet wird.

In einer weiteren vorteilhaften Ausgestaltung kann die Vorrichtung mit einer Abgasrückführung für Verbrennungsabgase ausgestattet sein. Hierfür ist bevorzugt vorgesehen, daß die der Brennkraftmaschine zugewandte Gehäusewandung eine zunächst offene und in Längsrichtung verlaufende Rinne aufweist, welche unter Bildung eines Abgasverteilers für rückgeführtes Abgas anschließend von einem Deckel verschlossen wird.

Alternativ zu der Rinne kann ein Rohr zur Verteilung des rückgeführten Abgases direkt eingegossen oder in eine dafür vorgesehene Ausnehmung eingesteckt werden. Unabhängig von diesen Ausführungen wird das rückzuführende Abgas endseitig in den Kanal bzw. das Rohr eingespeist und über zylinderindividuelle Querbohrungen den ebenso zylinderindividuellen Saugrohren zugeführt.

Weitere Vorteile, bevorzugte Ausführungsformen und Merkmale der Erfindung ergeben sich aus der nachfolgenden Beschreibung eines Ausführungsbeispieles der Erfindung, der Zeichnung sowie den abhängigen Patentansprüchen.

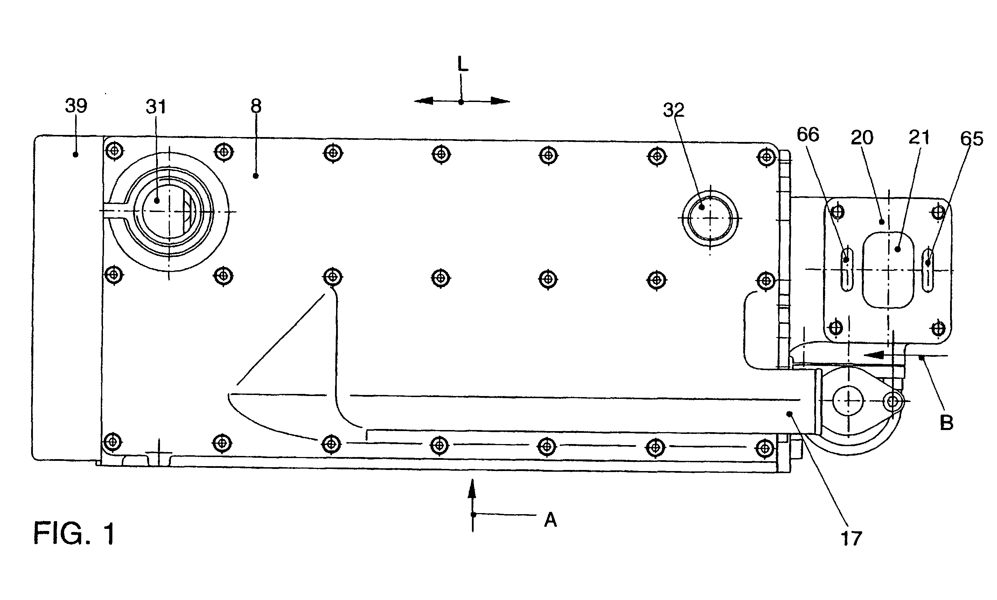

Die Zeichnung zeigt im einzelnen in
Figur 1 eine Draufsicht auf eine Vorrichtung,
Figur 2 eine Ansicht aus Pfeilrichtung A gemäß Figur 1,

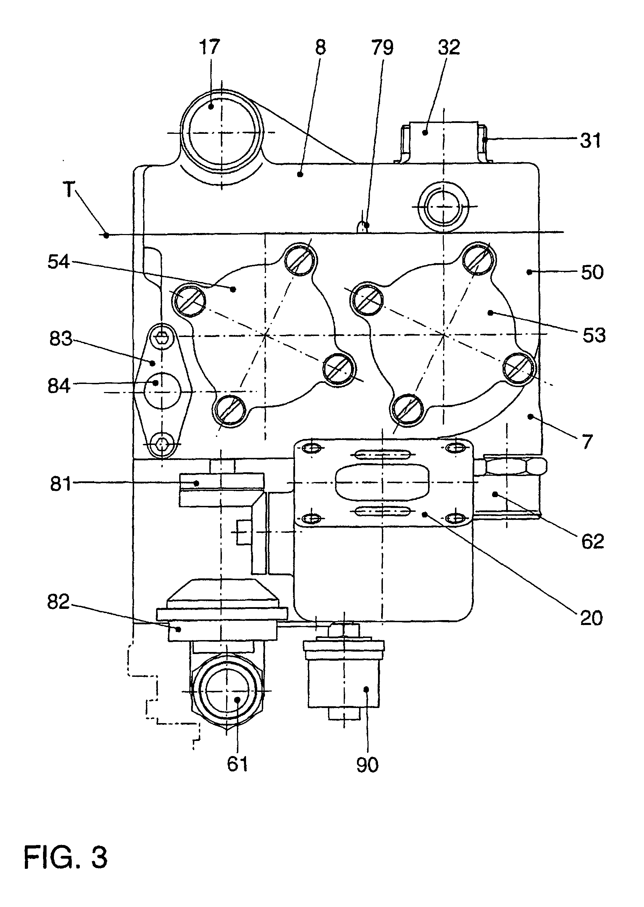

Figur 3 eine Ansicht in Pfeilrichtung B ohne Aufladeeinrichtung gemäß Figur 1,
Figur 4 einen Schnitt entlang der Linie IV - IV gemäß Figur 2,

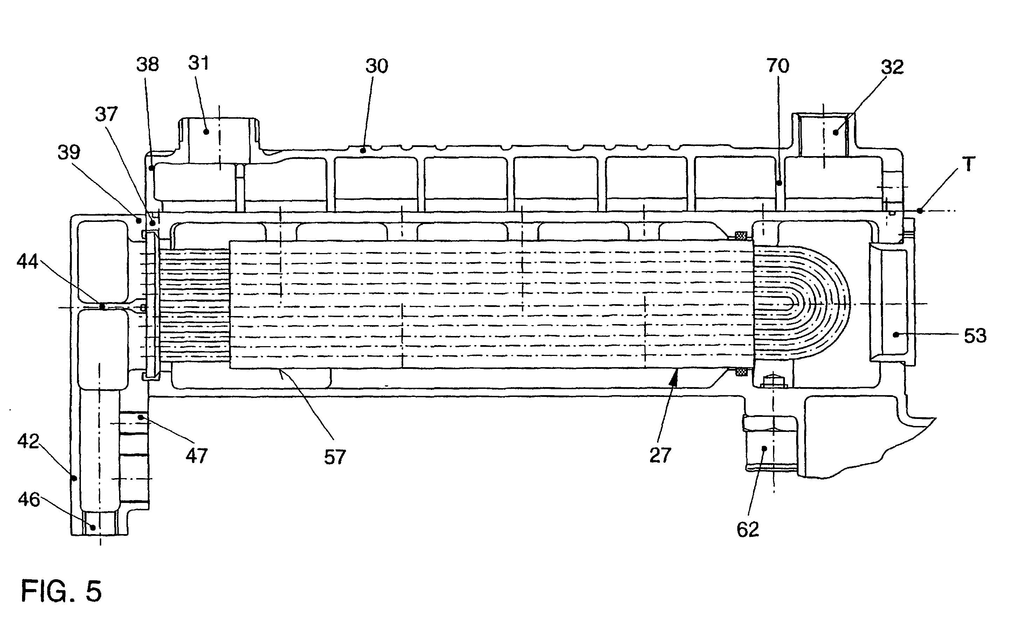

Figur 5 einen Schnitt entlang der Linie V - V gemäß Figur 4,
Figur 6 einen Schnitt entlang der Linie VI - VI gemäß Figur 2,
Figur 7 einen Schnitt entlang der Linie VII - VII gemäß Figur 2 und

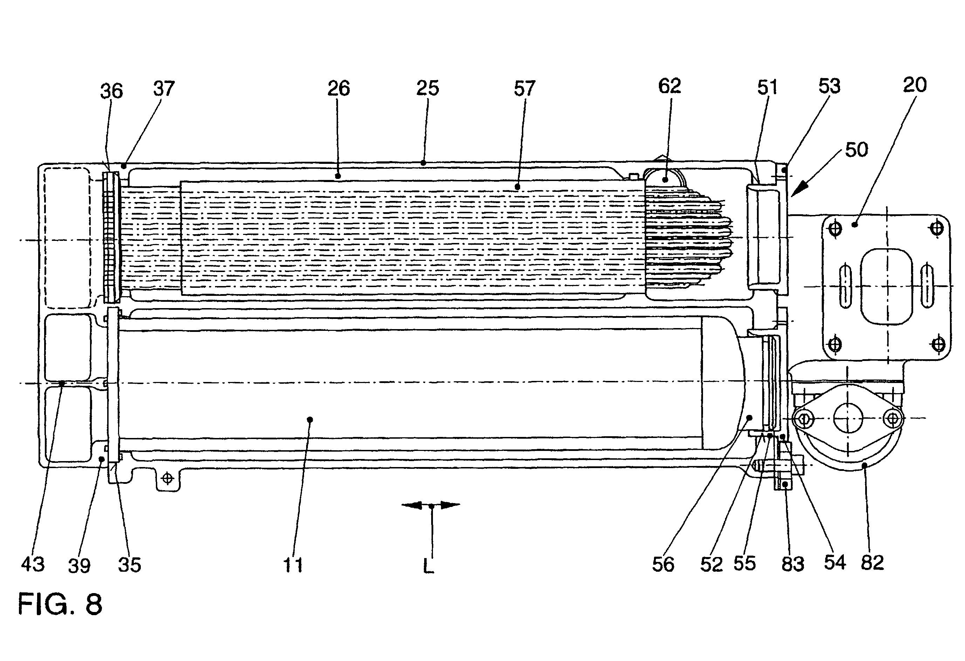

Figur 8 einen Schnitt entlang der Linie VIII - VIII gemäß Figur 2.

An einem Zylinderkopf einer nicht gezeigten Brennkraftmaschine ist mittels Schraubverbindungen 1 ein insgesamt mit 2 bezeichnetes Gehäuse gehalten. Eine dem Zylinderkopf zugewandte Gehäusewandung 3 weist einen Anschlußflansch 4 auf, in welchem unter anderem Austrittsöffnungen 5 für Frischgas sowie Eintrittsöffnungen 6 für Abgas liegen.
Über diesen Anschlußflansch 4 erfolgt somit der Austausch von gasförmigen Medien mittels der erwähnten Öffnungen 5 und 6, ebenso wie der später noch zu erläuternde Austausch von flüssigen Medien.
Das Gehäuse 2 ist im wesentlichen zweiteilig ausgebildet, wobei in einer Trennebene T ein gegenüber dieser Ebene T offener Gehäusegrundkörper 7 sowie ein ebenso offener Gehäusedeckel 8 aneinander grenzen.
Die Gehäusewandung 3 verläuft im wesentlichen senkrecht zur Trennebene T, ebenso wie eine im wesentlichen parallel dazu verlaufende Trennwand 9.

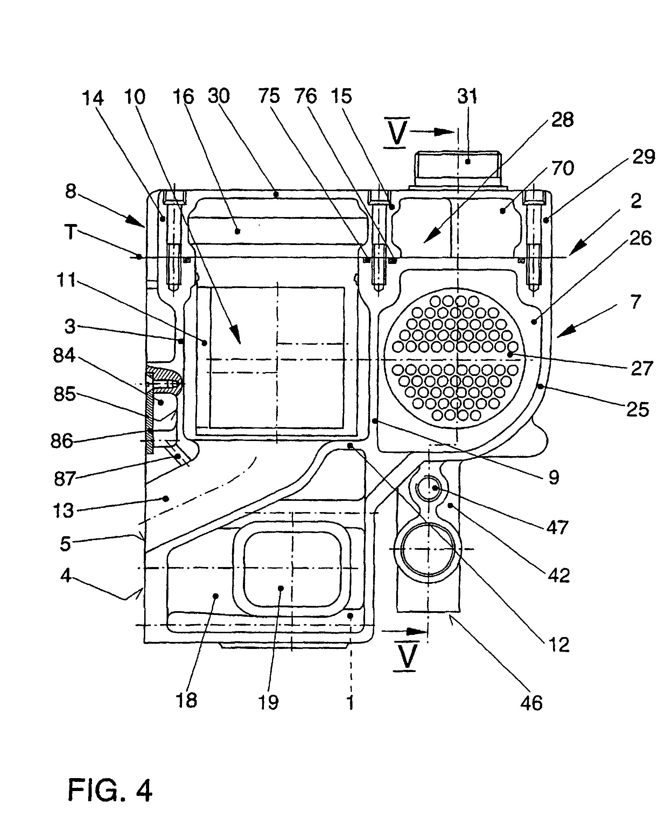

Gemäß Figur 4 ist zwischen Gehäusewandung 3 und Trennwand 9 ein Verbrennungsluft führender Kanal 10 ausgebildet, in welchen ein Luft/Flüssigkeitswärmetauscher 11 eingesetzt ist. Der Kanal 10 weist einen Boden 12 auf, von welchem aus sich zylinderindividuelle Saugrohre 13 bis zu den Austrittsöffnungen 5 erstrecken. Zwischen einem dem Gehäusedeckel 8 zugeordneten Wandabschnitt 14 der Gehäusewandung 3 und einem deckelseitigen Trennwandabschnitt 15 ist ein den Kanal 10 überdeckender und abdichtender, luftzuführender Schacht 16 ausgebildet. In diesen Schacht 16 wird in noch zu erläuternder Weise über einen Lufteinlaß 17 Verbrennungsluft zugeführt.

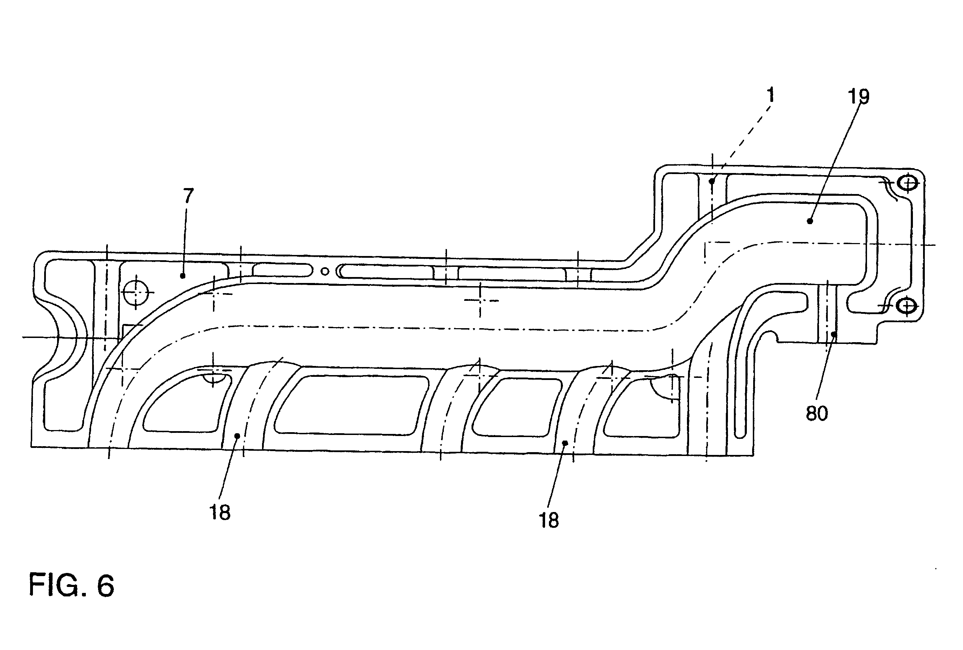

Unterhalb des Bodens 12 verlaufen zwischen Gehäusewandung 3 und Trennwand 9, wie am Besten aus den Figuren 4 und 6 erkennbar, von den Eintrittsöffnungen 6 ausgehend zylinderindividuelle Abgasleitungen 18, welche in einen gemeinsamen Abgassammler 19 münden.
Der über diesen Abgassammler 19 abgeführte Abgasstrom verläßt über eine in einem stimseitig des Gehäuses 2 angeordneten Befestigungsflansch 20 liegende Abgasöffnung 21 das Gehäuse 2.
An diesem Befestigungsflansch 20 kann, wie im vorliegenden Ausführungsbeispiel, eine Aufladeeinrichtung 22 für Verbrennungsluft angeordnet sein, in diesem Falle ein an sich bekannter Abgasturbolader. Der von der Abgasturbine angetriebene Luftverdichter führt die komprimierte Luft dem Lufteinlaß 17 zu.

Auf der von der Gehäusewandung 3 abgewandten Seite der Trennwand 9 liegend weist das Gehäuse 2 eine Außenwand 25 auf. Diese begrenzt neben dem Kanal 10 liegend einen flüssigkeitsgefüllten Kühlerraum 26, in welchem ein Flüssigkeits/Flüssigkeits-Wärmetauscher 27 angeordnet ist.
Der Kühlerraum 26 ist oberhalb der Trennebene T als Kühlflüssigkeitsbehälter 28, mit einer Funktion als Dehngefäß, ausgebildet. Gemäß Figur 4 ist dieser Behälter 28 seitlich im wesentlichen durch den deckelseitigen Trennwandabschnitt 15 sowie einen deckelseitigen Außenwandabschnitt 29 begrenzt. Der Gehäusedeckel 8 weist im Bereich des Kühlflüssigkeitsbehälters 28 in einem Boden 30 eine Einfüllöffnung 31 sowie einen Aufnahmestutzen 32 für einen Kühlflüssigkeitsstandsensor auf.

Endseitig des Gehäuses 2 weist dieses eine mit im Bereich des Kanales 10 und des Wärmetauschers 27 liegenden Öffnungen 35 und 36 versehene Querwandung 37 auf. Ein deckelseitiger Querwandabschnitt 38 bildet dabei zugleich eine äußere Begrenzungswand des Gehäusedeckels 8. Die somit im Gehäusegrundkörper 7 ausgebildeten Öffnungen 35 und 36 sind von einem insgesamt mit 39 bezeichneten Verteilergehäuse für eine zugeführte Kühlflüssigkeit überdeckt. Dieses weist an einer Unterseite 40 liegend einen Rohwassereinlaß 41 für Seewasser sowie benachbart dazu liegend einen Rohwasserauslaßstutzen 42 auf.
Innerhalb des Verteilergehäuses 39 sind mehrere Leitwände 43, 44 derartig angeordnet, daß das zugeführte Rohwasser zunächst den Ladeluftkühler 11 in einer Längsrichtung L in der einen Richtung durchströmt, endseitig in diesem Kühler 11 umgelenkt wird und erneut in Längsrichtung L zum Verteilergehäuse 39 zurückströmt. Anschließend wird es über einen im Verteilergehäuse 39 ausgebildeten Überströmkanal dem als Rohrbündel ausgebildeten Wärmetauscher 27 zugeführt und durchströmt diesen wiederum in Längsrichtung L bis zur Umlenkung am gegenüberliegenden Ende und gelangt von dort in entgegengesetzter Richtung zu dem Rohwasserauslaßstutzen 42. Dieser weist zur Vermeidung von Korrosionsproblemen eine Opferanodenaufnahme 46 sowie eine Sensoraufnahme 47 für einen Temperatursensor auf.

An der der Querwandung 37 gegenüberliegenden Stirnseite 50 des Gehäuses 2 weist dieses in Flucht mit den Öffnungen 35 und 36 weitere Öffnungen 51 und 52 auf, welche von Deckeln 53 und 54 verschlossen sind. Diese Deckel 53 und 54 können in einem Bauteil vereinigt sein. Der Deckel 54 weist eine in die Öffnung 52 eingreifende Hülse 55 auf, welche ihrerseits in abgedichteter Form einen Zapfen 56 des Ladeluftkühlers 11 zu dessen Lagerung aufnimmt.
Die Lagerung des Wärmetauschers 27 erfolgt benachbart der Stirnseite 50 über dessen Außenhülle 57 innerhalb des Kühlerraumes 26.

Das zu kühlende Süßwasser des Motorkühlmittelkreislaufes wird dem Gehäuse 2 an dessen Unterseite 60 über einen Motorkühlwassereinlaß 61 zugeführt. Von dort aus wird es im Gegenstrom zu den Abgasleitungen 18 bzw. Abgassammler 19 in Richtung auf das Verteilergehäuse 39 geführt und im Bereich der Querwandung 37 zum Wärmetauscher 27 geleitet.
Von dort aus durchströmt es die Außenhülle 57, wobei es durch innenliegende Querwandungen auf einen mäanderförmigen Weg gezwungen wird, bis es anschließend benachbart zum Deckel 53 liegend einem Motorkühlwasserauslaß 62 zugeführt wird.
Ein Teilstrom des über den Motorkühlwasseranlaß 61 eingespeisten Wassers dient der Kühlung der Aufladeeinrichtung 22 und wird zu diesem Zwecke über eine im Befestigungsflansch 20 liegende Auslaßöffnung 65 dem Turbolader zugeführt und gelangt nach dessen Kühlung über eine Eintrittsöffnung 66 wieder zurück in das Gehäuse 2. Sich eventuell in der Aufladeeinrichtung 22 ansammelnde Luftbläschen werden an geodätisch höchster Stelle liegend von dieser über eine Entlüftungsleitung 67 dem Kühlflüssigkeitsbehälter 28 zugeführt.

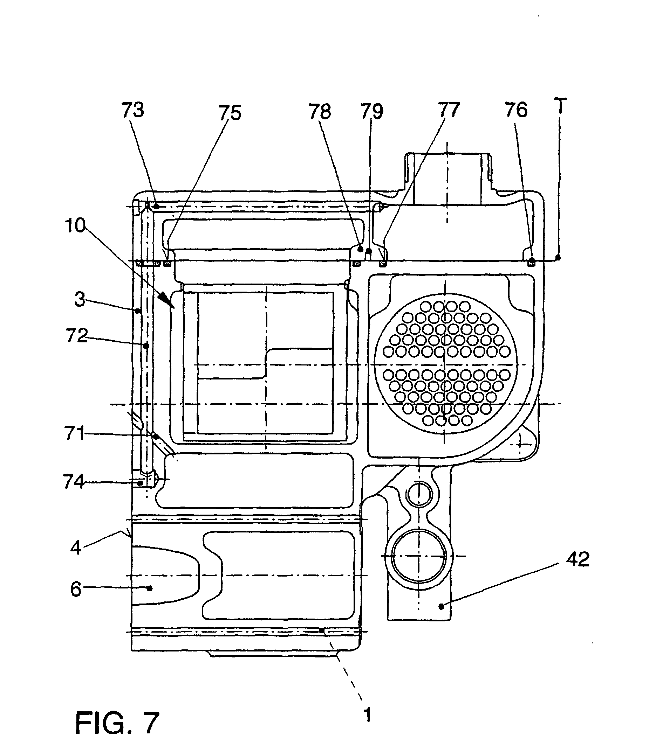

Der oberhalb des Wärmetauschers 27 liegende und als Dehngefäß wirkende Bereich des Kühlflüssigkeitsbehälter 28 weist labyrinthartige Querschotten 70 zur gezielten Entgasung des Motorkühlwassers auf. Sich unterhalb des Bodens 12 ansammelnde Luftbläschen werden gemäß Figur 7 über mehrere Bohrungen 71, 72, 73 ebenfalls dem Dehngefäß zugeführt. In den Anschlußflansch 4 mündet eine weitere, die Bohrung 72 anschneidende Bohrung 74, welche für den direkten Übertritt von Kühlflüssigkeit und Gasblasen aus dem Zylinderkopf in das Dehngefäß ausgelegt ist.

Zur mediengerechten Abdichtung der Flüssigkeiten und Gase sind in der Trennebene T in den Gehäusegrundkörper 7 zwei in sich geschlossene und umlaufende Dichtungen 75 und 76 eingelegt.
Als zusätzliche Sicherheitsmaßnahme gegen einen Übertritt von Motorkühlwasser in den Ladeluft führenden Bereich, ist in einer Dichtfläche 77 eines Dichtflansches 78 des deckelseitigen Trennwandabschnittes 15 eine in Längsrichtung L verlaufende Rinne 79 angeordnet. Diese mündet offen in die Stirnseite 50 und leitet somit evtl. durchgetretenes Kühlwasser von außen deutlich sichtbar ab.

Zur Einhaltung verschärfter Abgasgrenzwerte ist die Vorrichtung mit einer Abgasrückführung ausgestattet. Diese kann optional an der Vorrichtung appliziert werden und löst diesen gesamten Funktionsumfang von der eigentlichen Brennkraftmaschine. Im Bereich des Befestigungsflansches 20 weist der Gehäusegrundkörper 7 eine Bohrung 80 (Figur 6) auf, welcher das rückzuführende Abgas einem zwecks besserer Übersichtlichkeit nicht dargestellten Abgasrückführventil zuführt. Dieses ist an einem Halter 81 befestigt und wird von einer Druckdose 82 in an sich bekannter Weise betätigt. Bei geöffnetem Abgasrückführventil leitet dieses einen Teilabgasstrom über einen Flansch 83 einem Abgasrückführkanal 84 zu.
Dieser ist in überraschend einfacher Weise durch eine an sich offene Rinne 85 in der Gehäusewandung 3 gebildet, welche zur Bildung dieses Abgasrückführkanales 84 von einem Deckel 86 verschlossen ist. Das so eingespeiste Abgas wird gemäß Figur 4 aus diesem Abgasrückführkanal 84 über zylinderindividuelle Querbohrungen 87 den Saugrohren 13 zugeführt.

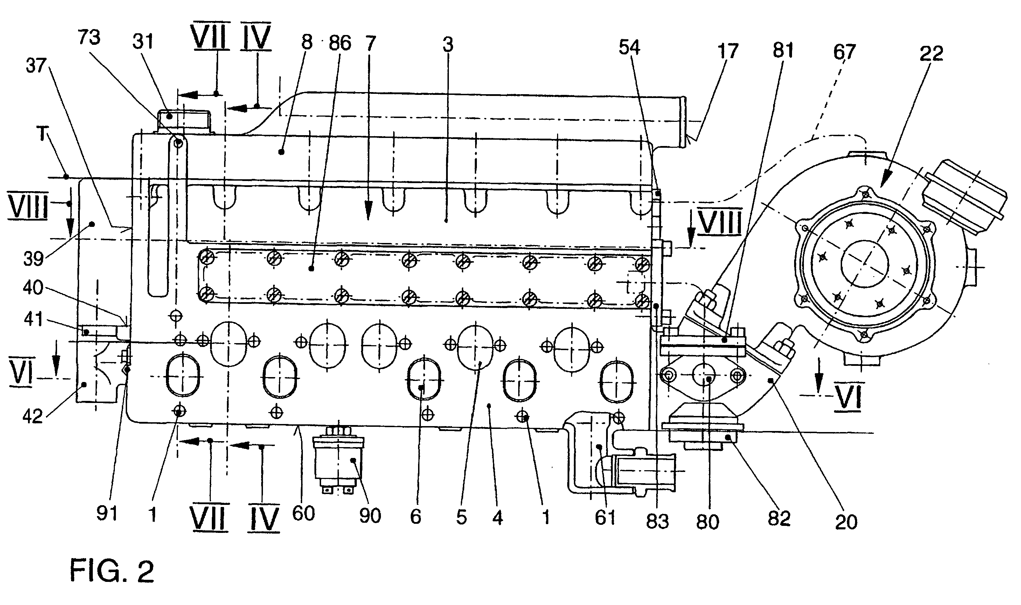

Im Betrieb der erfindungsgemäßen Vorrichtung werden Temperaturen und/oder Drücke der beteiligten Medien überwacht, wie beispielsweise anhand der Sensoraufnahme 47 bereits erläutert. Weiterhin ist an der Unterseite 60 oder an anderer beliebiger Stelle ein Ladeluftdrucksensor 90 angeordnet, sowie ein Ladelufttemperatursensor 91 in der Querwandung 37 (Fig. 2). Nach einem Kaltstart der Brennkraftmaschine wird in an sich bekannter Weise unter Heranziehung eines brennkraftmaschinenseitigen Thermostates der Wärmetauscher 27 zunächst umgangen.

Soll die Vorrichtung ohne Aufladeeinrichtung 22 betrieben werden, so kann in einfacher Weise an den diesbezüglichen Befestigungsflansch 20 eine Abgasleitung angeschlossen werden, welche ggf. mittels der Auslaß- bzw. Einlaßöffnung 65, 66 gekühlt sein kann. Im Falle dieser freisaugenden Brennkraftmaschine wird über den Lufteinlaß 17 die angesaugte Frischluft zugeführt und unter Entfall eines Ladeluftkühlers über den Kanal 10 direkt den Saugrohren 13 zugeführt. Durch ein geändertes Verteilergehäus 39 bzw. durch das Einsetzen einer geeigneten Verschluß- oder Umlenkplatte in das bereits beschriebene Verteilergehäuse 39 wird die im Falle der freisaugenden Brennkraftmaschine überflüssige Durchströmung des Schachtes 10 mit Rohwasser verhindert, so daß das in dieses Verteilergehäuse 39 eintretende Rohwasser unmittelbar dem Wärmetauscher 27 zugeführt wird.

In Abweichung von der gezeigten Ausführungsform der Kühler 11 bzw. 27 kann die Umlenkung des Rohwasserstromes benachbart zu den Deckeln 53 und 54 von den Kühlem 11 bzw. 27 getrennt erfolgen, was eine diesbezügliche Vereinfachung bei deren Herstellung gewährleistet. Hierbei können die Deckel 53 und 54 in mit dem Verteilergehäuse 39 vergleichbarer Weise mit Leitwänden versehen sein, welche dafür sorgen, daß die stumpf aus den Kühlem 11 bzw. 27 austretenden Wasserströme innerhalb der Deckel umgeleitet und in die Kühler zurückgeführt werden. Vorteilhaft hierbei ist unter anderem auch eine deutlich vereinfachte Möglichkeit zur Reinigung der Rohrbündel.

## Patentansprüche

1. Vorrichtung zur integrierten Führung von flüssigen und gasförmigen Medien einer Brennkraftmaschine, mit einem benachbart zu einem Zylinderkopf an der Brennkraftmaschine gehaltenen Gehäuse (2), mit einem Befestigungsflansch (20) für eine Aufladeeinrichtung (22) für Verbrennungsluft, wobei innerhalb des Gehäuses (2) benachbart zu einer der Brennkraftmaschine zugewandten Gehäusewandung (3) ein Verbrennungsluft führender Kanal (10) und benachbart zu deren von der Brennkraftmaschine abgewandten Seite ein Wärmetauscher (27) angeordnet ist,
**dadurch gekennzeichnet, daß** das Gehäuse (2) geteilt ausgebildet ist und die Teilungsebene (T) im wesentlichen senkrecht zu der Gehäusewandung (3) verläuft, wobei in einem zu dieser Teilungsebene (T) hin offenen Gehäusegrundkörper (7) der Verbrennungsluft führende Kanal (10) und sich daran anschließende, mit dem Zylinderkopf zusammenwirkende Saugrohre (13) sowie der Wärmetauscher (27) angeordnet sind, und ein zur Teilungsebene (T) hin offener Gehäusedeckel (8) einen den Kanal (10) überdeckenden, luftzuführenden Schacht (16) bildet.

2. Vorrichtung nach Anspruch 1, **dadurch gekennzeichnet, daß** in dem Kanal (10) ein weiterer Wärmetauscher (11) angeordnet ist.

3. Vorrichtung nach Anspruch 2, **dadurch gekennzeichnet, daß** der eine Wärmetauscher (27) als ein Flüssigkeits/Flüssigkeitswärmetauscher und der weitere Wärmetauscher (11) als ein Luft/Flüssigkeitswärmetauscher ausgebildet ist.

4. Vorrichtung nach Anspruch 1, **dadurch gekennzeichnet, daß** das Gehäuse (2) eine im wesentlichen senkrecht zur Teilungsebene (T) verlaufende Trennwand (9) zwischen dem Kanal (10) und dem einen Wärmetauscher (27) aufweist, welche abschnittsweise im Gehäusegrundkörper (7) und im Gehäusedeckel (8) ausgebildet ist.

5. Vorrichtung nach Anspruch 4, **dadurch gekennzeichnet, daß** ein dem Gehäusedeckel (8) zugeordneter Wandabschnitt (14) der Gehäusewandung (3) gemeinsam mit dem deckelseitigen Trennwandabschnitt (15) den luftzuführenden Schacht (16) begrenzt und im wesentlichen parallel dazu liegend zwischen diesem Trennwandabschnitt (15) und einem deckelseitigen Außenwandabschnitt (29) ein Flüssigkeitsbehälter (28) ausgebildet ist.

6. Vorrichtung nach Anspruch 5, **dadurch gekennzeichnet, daß** der Trennwandabschnitt (15) an die Trennebene (T) grenzend eine an einem Dichtflansch (78) ausgebildete Dichtfläche (77) aufweist, in welcher eine in Längsrichtung (L) verlaufende Rinne (79) angeordnet ist, die zumindest in einer Stirnseite (50) des Gehäusedeckels (8) ins Freie mündet.

7. Vorrichtung nach Anspruch 1, **dadurch gekennzeichnet, daß** in der der Brennkraftmaschine zugewandten Gehäusewandung (3) eine in Längsrichtung (L) benachbart zu den Saugrohren (13) verlaufende Rinne (85) eingeformt ist, welche unter Bildung eines Abgasrückführkanales (84) von einem Deckel (86) verschlossen ist und mittels Querbohrungen (87) mit jedem Saugrohr (13) in Strömungsverbindung steht.

8. Vorrichtung nach Anspruch 1, **dadurch gekennzeichnet, daß** in der der Brennkraftmaschine zugewandten Gehäusewandung (3) ein in Längsrichtung (L) benachbart zu den Saugrohren (13) verlaufendes Rohr eingebracht ist, welches unter Bildung eines Abgasrückführkanales (84) mittels Querbohrungen (87) mit jedem Saugrohr (13) in Strömungsverbindung steht.

9. Vorrichtung nach Anspruch 1 oder 2, **dadurch gekennzeichnet, daß** endseitig des Gehäuses (2) an einer, mit im Bereich des Verbrennungsluft führenden Kanales (10) und des Wärmetauschers (27) liegenden Öffnungen (35, 36) versehene, Querwandung (37) ein Verteilergehäuse (39) für eine zugeführte Kühlflüssigkeit angeordnet ist, welches mittels Leitwänden (43,44) die Kühlflüssigkeit dem Kanal (10) und/oder dem Wärmetauscher (27) zuleitet bzw. von diesem ableitet.

## Claims

1. Device for the integrated routing of liquid and gaseous media of an internal combustion engine, with a housing (2) held adjacently to a cylinder head on the internal combustion engine, and with a fastening flange (20) for a charging means (22) for combustion air, a duct (10) which carries combustion air being arranged within the housing (2) adjacently to a housing wall (3) facing the internal combustion engine, and a heat exchanger (27) being arranged adjacently to that side of said housing wall which faces away from the internal combustion engine, **characterized in that** the housing (2) has a split design and the parting plane (T) runs essentially perpendicularly to the housing wall (3), there being arranged in a housing basic body (7) open towards this parting plane (T) the duct (10) which carries combustion air and adjoining suction pipes (13) cooperating with the cylinder head, and also the heat exchanger (27), and a housing cover (8) open towards the parting plane (T) forming an air-supplying well (16) covering the duct (10).

2. Device according to Claim 1, **characterized in that** a further heat exchanger (11) is arranged in the duct (10).

3. Device according to Claim 2, **characterized in that** the one heat exchanger (27) is designed as a liquid/liquid heat exchanger and the further heat exchanger (11) as an air/liquid heat exchanger.

4. Device according to Claim 1, **characterized in that** the housing (2) has, between the duct (10) and the one heat exchanger (7), a partition (9) which runs essentially perpendicularly to the parting plane (T) and which is formed in portions in the housing basic body (7) and in the housing cover (8).

5. Device according to Claim 4, **characterized in that** a wall portion (14), assigned to the housing cover (8), of the housing wall (3), together with the cover-side partition portion (15), delimits the air-supplying well (16), and, lying essentially parallel thereto, a liquid container (28) is formed between this partition portion (15) and a cover-side outer-wall portion (29).

6. Device according to Claim 5, **characterized in that** the partition portion (15) has, continuously to the parting plane (T), a sealing surface (77) which is formed on a sealing flange (78) and in which is arranged a groove (79) running in the longitudinal direction (L) and issuing into the open at least in one end face (50) of the housing cover (8).

7. Device according to Claim 1, **characterized in that** there is integrally formed in the housing wall (3) facing the internal combustion engine a groove (85) which runs adjacently to the suction pipes (13) in the longitudinal direction (L) and which, to form an exhaust-gas recirculation duct (84), is closed by a cover (86) and is flow-connected to each suction pipe (13) by means of transverse bores (87).

8. Device according to Claim 1, **characterized in that** there is introduced into the housing wall (3) facing the internal combustion engine a pipe which runs adjacently to the suction pipes (13) in the longitudinal direction (L) and which, to form an exhaust-gas recirculation duct (84), is flow-connected to each suction pipe (13) by means of transverse bores (87).

9. Device according to Claim 1 or 2, **characterized in that** at the end face of the housing (2), there is arranged, on a transverse wall (37) provided with orifices (35, 36) lying in the region of the duct (10) carrying combustion air and of the heat exchanger (27), a distributor housing (39) for a supplied cooling liquid which, by means of guide walls (43, 44), respectively feeds the cooling liquid to and discharges it from the duct (10) and/or the heat exchanger (27).

## Revendications

1. Dispositif de guidage intégré de substances liquides ou gazeuses d'un moteur à combustion interne, avec une enceinte (2) attachée au moteur à combustion interne à proximité d'une culasse, avec une bride de fixation (20) pour un dispositif de suralimentation (22) pour l'air de combustion, dans lequel un canal (10) de guidage de l'air de combustion est disposé à l'intérieur de l'enceinte (2) à proximité d'une paroi de l'enceinte (3) tournée vers le moteur à combustion interne et un échangeur de chaleur (27) est disposé à proximité du côté de celui-ci situé à l'opposé du moteur à combustion interne, **caractérisé en ce que** l'enceinte (2) est divisée et le plan de division (T) est sensiblement perpendiculaire à la paroi de l'enceinte (3), le canal (10) de guidage de l'air de combustion et des tuyaux d'aspiration (13) qui s'y raccordent et qui coopèrent avec la culasse, ainsi que l'échangeur de chaleur (27), étant disposés dans un corps de base de l'enceinte (7) ouvert vers ce plan de division (T), et un couvercle (8) de l'enceinte ouvert vers le plan de division (T) formant un puits (16) de guidage de l'air recouvrant le canal (10).

2. Dispositif suivant la revendication 1, **caractérisé en ce qu'**un échangeur de chaleur supplémentaire (11) est disposé dans le canal (10).

3. Dispositif suivant la revendication 2, **caractérisé en ce que** l'un des échangeurs de chaleur (27) est un échangeur de chaleur liquide/liquide et l'autre des échangeurs de chaleur (11) est un échangeur de chaleur air/liquide.

4. Dispositif suivant la revendication 1, **caractérisé en ce que** l'enceinte (2) présente une paroi de séparation (9) entre le canal (10) et le premier échangeur de chaleur (27), orientée sensiblement perpendiculairement au plan de division (T), qui est formée en partie dans le corps de base (7) de l'enceinte et dans le couvercle (8) de l'enceinte.

5. Dispositif suivant la revendication 4, **caractérisé en ce qu'**une partie de paroi (14) de la paroi d'enceinte (3), associée au couvercle (8) de l'enceinte, limite le puits de guidage d'air (16) avec la partie (15) de la paroi de séparation située du côté du couvercle et un réservoir de liquide (28) essentiellement parallèle à celui-ci est formé entre cette partie (15) de la paroi de séparation et une partie (29) de la paroi extérieure du côté du couvercle.

6. Dispositif suivant la revendication 5, **caractérisé en ce que** la partie (15) de la paroi de séparation adjacente au plan de division (T) présente une surface d'étanchéité (77) formée sur une bride d'étanchéité (78), dans laquelle est disposée une rigole (79) orientée dans le sens longitudinal (L), qui débouche à l'air libre au moins dans une face frontale (50) du couvercle (8) de l'enceinte.

7. Dispositif suivant la revendication 1, **caractérisé en ce qu'**une rigole (85) orientée dans le sens longitudinal (L) à proximité des tuyaux d'aspiration (13) est formée dans la paroi de séparation (3) tournée vers le moteur à combustion interne, rigole qui est fermée par un couvercle (86) en formant un canal de retour des gaz d'échappement (84) et qui se trouve en communication d'écoulement avec chaque tuyau d'aspiration (13) au moyen de trous transversaux (87).

8. Dispositif suivant la revendication 1, **caractérisé en ce qu'**un tube orienté dans le sens longitudinal (L) à proximité des tuyaux d'aspiration (13) est ménagé dans la paroi de l'enceinte (3) tournée vers le moteur à combustion interne, tube qui est en communication d'écoulement avec chaque tuyau d'aspiration (13) au moyen de trous transversaux (87) en formant un canal de retour des gaz d'échappement (84).

9. Dispositif suivant la revendication 1 ou 2, **caractérisé en ce qu'**à l'extrémité de l'enceinte (2), sur une paroi transversale (37) pourvue d'ouvertures (35, 36) situées dans la région du canal (10) de guidage d'air de combustion et de l'échangeur de chaleur (27), est disposé un boîtier de distributeur (39) pour un liquide de refroidissement ajouté, qui amène le liquide de refroidissement au canal (10) et/ou à l'échangeur de chaleur (27), ou qui l'en évacue, au moyen de parois de guidage (43, 44).
